# EUROPÄISCHE PATENTANMELDUNG

(11) **EP 1 314 709 A2**
(43) Veröffentlichungstag der Anmeldung: **28.05.2003**
(21) Anmeldenummer: 02026264.8
(22) Anmeldetag: 26.11.2002
(51) Int. Cl.: C04B 41/63, C04B 41/72

(54) **Verfahren zum Veredeln der Oberfläche von Bauteilen aus zementgebundenen Baustoffen**

(30) Priorität: 27.11.2001 DE 10158455
(71) Anmelder: Remei GmbH & Co. KG, 32825 Blomberg (DE); Scheuerlein, Richard, 93105 Tegernheim (DE)
(72) Erfinder: Töllner, Fritz, 31608 Marklohe (DE); Scheuerlein, Richard, 93105 Tegernheim (DE)
(74) Vertreter: Pohlmann, Eckart, Dipl.-Phys.

(57) **Zusammenfassung**

Verfahren zum Veredeln der Oberfläche von Betonbauteilen, insbesondere von Beton- und Betonwerksteinplatten, -steinen und -stufen, bei dem die Oberfläche der Betonbauteile gebürstet wird und anschließend die gebürstete Oberfläche zur Konservierung mit einem Kunstharz nachbehandelt wird.

## Beschreibung

Die Erfindung betrifft ein Verfahren zum Veredeln der Oberfläche von Bauteilen aus zementgebundenen Baustoffen, insbesondere Betonbauteilen, wie Beton- und Betonwerksteinplatten, -steinen und -stufen.

Betonbauteile, wie Beton- und Betonwerksteinplatten,-steine oder -stufen, werden unbehandelt oder durch verschiedene bekannte Verfahren, wie z. B. Fräsen, Schleifen und/oder Strahlen behandelt mit feiner oder rauher Oberfläche hergestellt, die eine feine oder stumpfe Rauheit zeigt. Es ist weiterhin üblich, derartige Betonbauteile nachträglich zu versiegeln oder mit einem Lackauftrag gegen das Eindringen von Feuchtigkeit zu versehen.

Die der Erfindung zugrunde liegende Aufgabe besteht demgegenüber darin, ein Verfahren anzugeben, mit dem die Oberfläche derartiger Bauteile veredelt werden kann.

Diese Aufgabe wird gemäß der Erfindung durch das im Anspruch 1 angegebene Verfahren gelöst.

Bevorzugte Ausgestaltungen und Weiterbildungen des erfindungsgemäßen Verfahrens sind Gegenstand der Ansprüche 2 bis 12.

Im Folgenden werden anhand der zugehörigen Zeichnung besonders bevorzugte Ausführungsbeispiele der Erfindung näher beschrieben.

Es zeigen

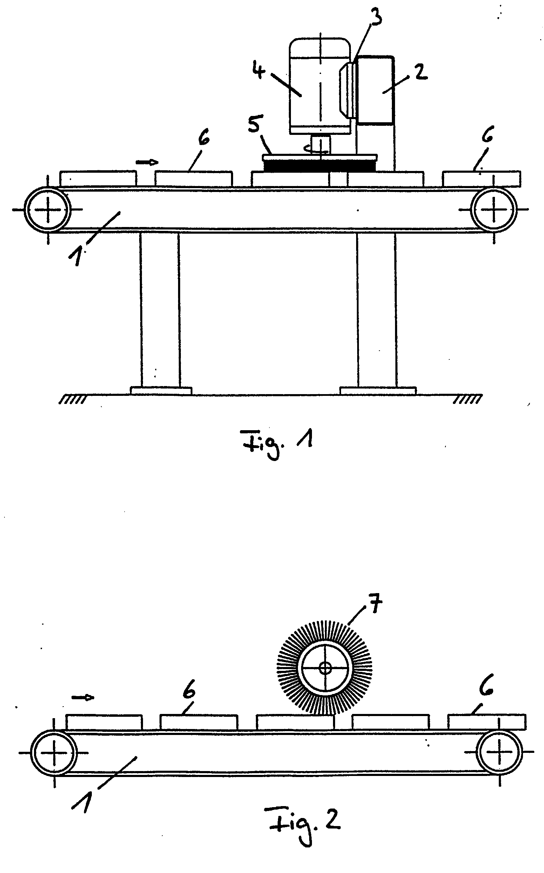

Fig. 1 eine Seitenansicht eines ersten Ausführungsbeispiels und Fig. 2 eine Teilseitenansicht eines zweiten Ausführungsbeispiels einer Vorrichtung zur Durchführung des erfindungsgemäßen Verfahrens.

Das in Fig. 1 dargestellte erste Ausführungsbeispiel einer Vorrichtung zum Veredeln der Oberfläche, insbesondere der Nutzfläche, von Betonbauteilen, insbesondere von Beton- und Betonwerksteinplatten, -steinen und -stufen umfaßt einen Förderer 1, der an einem Brückenständer 2 angebracht ist. Der Förderer 1 ist so ausgebildet, daß die zu behandelnden Betonbauteile 6 mit ihrer zu behandelnden Oberfläche nach außen befördert werden können.

Über der Förderebene, d. h. über der zu behandelnden Oberfläche der Betonbauteile 6 ist am Brückenständer 2 ein höhenverstellbar und z. B. oszillierender Support 3 mit einem Elektromotor 4 angeordnet, auf dessen Motorwelle eine Tellerbürste 5 sitzt.

Die Tellerbürste 5 ist vorzugsweise eine Bürste mit Kunststoff- oder Metall-, insbesondere Stahlborsten, die auch mit einer Schleif- und insbesondere Diamantkörnung versehen sein können. Vorzugsweise handelt es sich um Edelstahlborsten.

Die Ausbildung des Förderers 1 ist derart, daß die Vorschubgeschwindigkeit der zu behandelnden Betonbauteile 6 regelbar ist, so daß diese mit einer regelbaren Geschwindigkeit unter der Bürste 5 hindurchgeführt werden können. Auch der Anpressdruck der Bürste 5 ist über den höhenverstellbaren Support 3 regelbar, so daß die Vorschubgeschwindigkeit der Betonbauteile 6 und der Anpressdurck der Bürste 5 in Abhängigkeit von der Beschaffenheit und dem Material der Betonbauteile 6 eingestellt und angepasst werden können. Die Drehzahl der Bürste 5 ist so eingestellt, daß die Bürste eine Umfangsgeschwindigkeit von 5 - 300, insbesondere 25 bis 40 m/s hat.

Bei dem in Fig. 2 dargestellten Ausführungsbeispiel ist wie bei dem in Fig. 1 dargestellten Ausführungsbeispiel ein Förderer 1 vorgesehen, auf dem die zu bearbeitenden Betonbauteile 6 befördert werden. Im Unterschied zu dem in Fig. 1 dargestellten Ausführungsbeispiel ist bei dem in Fig. 2 dargestellten Ausführungsbeispiel jedoch keine Tellerbürste 5, sondern eine Walzenbürste (7) vorgesehen, die in der gleichen Weise wie beim Ausführungsbeispiel 1 gehalten ist.

Die oben beschriebenen Vorrichtungen arbeiten bei dem erfindungsgemäßen Verfahren wie folgt:

Betonbauteile beispielsweise Beton- oder Betonwerksteinplatten 6 mit unbehandelter oder durch Fräsen, Schleifen und/oder Strahlen vorbehandelter rauher Oberfläche, die eine stumpfe Rauheit zeigt, werden durch den Förderer 1 mit einer entsprechend eingestellten Vorschubgeschwindigkeit unter dem jeweiligen Bürstensystem 5, 7 durchgeführt, das mit der oben angegebenen Umfangsgeschwindigkeit rotiert und im Trockenverfahren gebürstet.

Durch die Bearbeitung der Oberfläche der Betonbauteile 6 mit Hilfe der rotierenden Bürsten 5, 7 wird eine Oberflächenglättung erzielt, die einer feingeschliffenen Fläche ähnlich ist. Bei unbearbeiteten oder gestrahlten Betonbauteilen wird dabei die stumpfe Rauheit der Oberfläche in eine speckig glänzende Rauheit umgewandelt, ohne daß dabei die Oberflächenunebenheiten beseitigt werden.

Dieses Verfahren gestattet nicht nur die Bearbeitung von ebenen Oberflächen, sondern auch von strukturierten Oberflächen ohne die Strukturen zu beseitigen sowie die Bearbeitung von gewellten bzw. kugeligen Oberflächen.

Ein besonderer Vorteil des Bürstenbehandlungsverfahrens besteht darin, daß die freiliegende Körnung und die zwischen den Körnungen tiefer liegenden Feinanteile durch Schleifwirkung geglättet werden und dabei eine Porenverdichtung und Verringerung der Poren erzielt wird. Das hat insbesondere Auswirkungen auf die hygroskopischen Eigenschaften der Oberfläche, die deutlich geringer sind, so daß bei einer nachträglich erfolgenden Versiegelung oder aber einem nachträglichen Lackauftrag eine geringere Auftragsmenge benötigt wird, was eine verkürzte Abbindezeit zur Folge hat.

Bei den oben beschriebenen Ausführungsbeispielen wurde jeweils eine einzige Bürste zur Behandlung der Oberfläche der Betonbauteile verwandt und war an der entsprechenden Vorrichtung lediglich eine einzige derartige Bürste vorgesehen. Bei dem erfindungsgemäßen Verfahren kann aber auch mit mehreren Bürsten gearbeitet werden, die jeweils mit eigenen Motoren angetrieben an einem Support angebracht sind oder gemeinsam über ein gemeinsames Antriebssystem angetrieben werden. Wenn mehrere Bürsten vorgesehen sind, können diese kombiniert Walzen- und Tellerbürsten sein.

Um die durch die Bürstenbehandlung erzielten Eigenschaften zu konservieren und die Oberfläche abnutzungs- und witterungsbeständig zu machen, wird erfindungsgemäß die bürstenbearbeitete Oberfläche mit einem Kunstharz auf Acrylat-, Polyurethan- oder Epoxidharzbasis oder auf einer daraus formulierten Mischpolymerbasis nachbehandelt.

Vorzugsweise handelt es sich bei dem Kunstharz um ein verkapptes zweikomponentiges Kunstharzsystem, das sich durch seine extrem lange Verarbeitungszeit von mindestens 72 Stunden auszeichnet und nach dem Mischen der beiden Komponenten quasi als ein Einkomponentensystem angesehen werden kann. Das Kunstharz kann mattiert oder glänzend sein.

Die Verfügbarkeit der mit diesem Kunstharz behandelten Oberfläche, d. h. die Blockfestigkeit ist nach maximal 5 Minuten erreicht. Dabei wird eine sogenannte Senklackeigenschaft erreicht, was bedeutet, daß eine sehr hohe Eindringtiefe erzielt wird.

Ein besonders bevorzugtes Beispiel eines derartigen Kunstharzes hat die folgende Zusammensetzung der beiden Kompenten A und B:

| Komponente "A": | |
|---|---|
| Acryl-Polymer | 30 - 40 % |
| Methylisobuthylketon | 20 - 25 % |
| Methoxy-1-methylethylacetat | 3 - 6 % |
| n-Buthylacetat | 20 - 35 % |
| Fluormethacrylatpolymer | 0,05 - 0,1 % |
| Kieselsäure (pyrogen) | 1 - 5 % |
| Celluloseacetat | 6 - 10 % |
| Polyethylenwachs | 1 - 5 % |

### Komponente "B"

### Aliphatisches Polyisocyanat in n-Buthylacetat (Mischungsverhältnis: 100:10 bis 100:15)

Die Prozentangaben verstehen sich als Gewichtsprozente am Gesamtgewicht der Komponente.

Die Nachbehandlung mit dem Kunstharz kann dadurch erfolgen, daß dieses aufgespritzt, aufgewalzt, aufgepinselt, aufgestrichen oder aufgebürstet wird. Je nach der Menge und der Art des aufgebrachten Kunstharzes wird eine Tiefenimprägnierung, eine Imprägnierung, eine filmbildende Imprägnierung, und/oder eine Versiegelung und Beschichtung der entsprechenden Oberfläche mit Konservierungsfunktion erzielt.

Zum Verdichten des Nachbehandlungsmittels bzw. zum Beschleunigen seiner Eindringgeschwindigkeit kann ein Rütteln, Schütteln oder eine andere mechanische Bewegung des behandelten Betonteils vorgesehen sein.

Die Trocknung der behandelten Oberfläche erfolgt dann vorzugsweise mit Warmluft auf 30 bis 80°C durch Bestrahlung mit Mikrowellen oder über andere geeignete Verfahren bei einer Verweil- bzw. Kontaktzeit von ca. 1 bis 5 Minuten.

Die getrocknete Oberfläche kann durch Bürsten, Reiben oder Polieren mechanisch nachbehandelt werden.

Bauteile die in dieser Weise bearbeitet worden sind, werden anschließend der werkseitigen Paketierung bzw. Weiterverwendung zugeführt.

## Patentansprüche

1. Verfahren zum Veredeln der Oberfläche von Bauteilen, aus zementgebundenen Baustoffen, insbesondere Betonbauteilen wie Beton- und Terazzoplatten, -steinen und -stufen, **dadurch gekennzeichnet, daß** die Oberfläche der Bauteile porenverdichtet wird und die porenverdichtete Oberfläche mit einem Kunstharz auf Acrylat-, Polyurethan- oder Epoxidharzbasis oder einer daraus formulierten entsprechenden Mischpolymerbasis nachbehandelt wird.

2. Verfahren nach Anspruch 1, **dadurch gekennzeichnet, daß** die Oberfläche der Bauteile bürstenbearbeitet wird.

3. Verfahren nach Anspruch 1, **dadurch gekennzeichnet, daß** das Kunstharz ein verkapptes zweikomponentiges Kunstharzsystem mit langer Verarbeitungszeit ist.

4. Verfahren nach Anspruch 3, **dadurch gekennzeichnet, daß** das zweikomponentige Kunstharzsystem Komponenten A und B mit den folgenden Zusammensetzungen in Gewichtsprozent hat:
| Komponente "A": | |
|---|---|
| Acryl-Polymer | 30 - 40 % |
| Methylisobuthylketon | 20 - 25 % |
| Methoxy-1-methylethylacetat | 3 - 6 % |
| n-Buthylacetat | 20 - 35 % |
| Fluormethacrylatpolymer | 0,05 - 0,1 % |
| Kieselsäure (pyrogen) | 1 - 5 % |
| Celluloseacetat | 6 - 10 % |
| Polyethylenwachs | 1 - 5 % |
Komponente "B"
Aliphatisches Polyisocyanat in n-Buthylacetat (Mischungsverhältnis: 100:10 bis 100:15)

5. Verfahren nach Anspruch 1, 2, 3 oder 4, **dadurch gekennzeichnet, daß** die Nachbehandlung dadurch erfolgt, daß das Kunstharz aufgespritzt, aufgewalzt, aufgepinselt, aufgestrichen und/oder aufgebürstet wird.

6. Verfahren nach einem der vorhergehenden Ansprüche, **dadurch gekennzeichnet, daß** die Betonteile bei der Nachbehandlung gerüttelt, geschüttelt oder in anderer Weise mechanisch bewegt werden.

7. Verfahren nach einem der vorhergehenden Ansprüche, **dadurch gekennzeichnet, daß** die nachbehandelte Oberfläche getrocknet wird.

8. Verfahren nach Anspruch 7, **dadurch gekennzeichnet, daß** die getrocknete Oberfläche mechanisch nachbearbeitet wird.

9. Verfahren nach Anspruch 1, **dadurch gekennzeichnet, daß** die Oberfläche der Betonbauteile mit einer rotierenden Bürste gebürstet wird.

10. Verfahren nach Anspruch 9, **dadurch gekennzeichnet, daß** die Bürste mit einer Umfangsgeschwindigkeit von 5 bis 300 m/s rotiert.

11. Verfahren nach Anspruch 9, **dadurch gekennzeichnet, daß** eine Bürste mit Metall- oder Kunststoffborsten verwendet wird.

12. Verfahren nach Anspruch 11, **dadurch gekennzeichnet, daß** die Metall- oder Kunststoffborsten eine Schleif-, insbesondere eine Diamantkörnung aufweisen.
